Europäisches Patentamt

European Patent Office

Office européen des brevets

(19)

(11) EP 0 740 436 A2

(12) **EUROPÄISCHE PATENTANMELDUNG**

(43) Veröffentlichungstag:
30.10.1996 Patentblatt 1996/44

(51) Int. Cl.⁶: **H04L 1/24**, H04L 25/45

(21) Anmeldenummer: 96106256.9

(22) Anmeldetag: 20.04.1996

(84) Benannte Vertragsstaaten:
AT BE CH FR GB IT LI NL SE

(30) Priorität: 27.04.1995 DE 19515577

(71) Anmelder: **MAN Roland Druckmaschinen AG**
63075 Offenbach (DE)

(72) Erfinder:
• **Klingler, Horst**
63165 Mühlheim/Main (DE)

• **Wende, Gerold**
60528 Frankfurt/Main (DE)
• **Schönfeld, Frank**
63165 Mühlheim/Main (DE)

(74) Vertreter: **Stahl, Dietmar**
**MAN Roland Druckmaschinen AG,**
**Abteilung FTB/S,**
**Postfach 101264**
**63012 Offenbach (DE)**

(54) **Verfahren und Einrichtung zum Vermeiden von Datenkollisionen**

(57) Beschrieben wird ein Verfahren sowie eine entsprechende Vorrichtung zur Signalübertragung zwischen zwei Rechnern (1, 2). wobei der Rechner (1) feststehend und der Rechner (2) insbesondere im Plattenzylinder einer Druckmaschine angebracht ist. Der die Signale übermittelnde Drehübertrager (12) ist dabei einkanalig ausgeführt. Es sollen Datenkollissionen durch gleichzeitiges Senden von Nachrichten durch die Rechner (1, 2) erkannt werden. Erfindungsgemäß wird dazu vorgeschlagen, daß beide Rechner (1, 2) beim Senden einer Nachricht gleichzeitig die am Übertragungskanal anliegenden Signale erfassen und mit den gesendeten vergleichen. Wird eine Ungleichheit festgestellt, so wird der Sendevorgang abgebrochen und erneut gestartet.

Fig.1

Printed by Rank Xerox (UK) Business Services
2.13.8/3.4

## Beschreibung

Die Erfindung betrifft ein Verfahren sowie eine Vorrichtung zur Signalübertragung gemäß dem Oberbegriff des jeweiligen Verfahrens- bzw. Vorrichtungsanspruches.

Aus der DE 4 129 373 A1 ist eine Vorrichtung für die Übertragung von elektrischer Energie und von Daten von einem feststehenden Maschinenbauteil auf ein sich drehendes Maschinenbauteil einer Druckmaschine bekannt. Beschrieben wird ein nach dem Transformator-Prinzip aufgebauter elektrischer Drehübertrager, vermittels dem beispielsweise in einem Plattenzylinder angebrachte fernverstellbare Antriebe von außen mit Strom versorgt werden können und denen von einer außerhalb des Zylinders gelegenen Steuerung Positionierbefehle zuführbar sind. Die Meßwerte von den Antrieben zugeordneten Stellungsgebern können ebenfalls über diesen Drehübertrager nach außen gesendet werden. Die in dem Plattenzylinder angeordneten Antriebe dienen insbesondere der Fernverstellung einer auf den Zylinder aufgespannten Druckplatte, so daß das Register beim Maschinenlauf in Seiten-, Umfangs- und Schrägregisterrichtung korrigiert werden kann.

Wird der in der oben genannten Schritt beschriebene Drehübertrager mit je einem Wicklungspaar für die Signal- und die Stromversorgung ausgeführt, so werden die Daten bidirektional übertragen. Auf dem Datenübertragungskanal werden also Signale von der maschinenfesten Steuerung in den Zylinder gesendet sowie auch umgekehrt von den Stellungsmeßgebern des Zylinders zur Steuerung. Komplexe Steuerungsaufgaben ergeben aber eine hohe Datenrate in beiden Richtungen, so daß Datenkollissionen - beide Seiten versuchen gleichzeitig Daten auf den Übertragungskanal zu senden - nicht auszuschließen sind. Dieses Problem kann dadurch umgangen werden, daß mehr als ein Übertragungskanal vorgesehen wird, also je ein Sende- und ein Empfangskanal (full-duplex). Dies bedeutet aber bei einem nach dem Transformator-Prinzip aufgebauten Drehübertrager, daß ein weiteres Wicklungspaar anzuordnen ist, was den Aufbau eines solchen Übertragers wegen den hohen Genauigkeitsanforderungen insbesondere hinsichtlich der Luftspalttoleranz usw. erheblich verkompliziert. Zur Vermeidung von Datenkollisionen ist es bei einkanaligen, bidirektionalen Übertragungssystemen auch bekannt, eine Station als Master und die zweite Station als Slave auszubilden und einen sogn. Polling-Betrieb vorsieht. Nachteilig ist hierbei aber, daß die Slave-Station nicht spontan senden kann.

Aufgabe der vorliegenden Erfindung ist es daher, ein Verfahren sowie eine Vorrichtung gemäß dem Oberbegriff des jeweiligen Verfahrens- bzw. Vorrichtungsanspruches derartig zu erweitern, daß bei einem einkanaligen Übertragungssystem ein bidirektionaler Datenverkehr mit größtmöglicher Störsicherheit möglich ist.

Gelöst wird diese Aufgabe durch die kennzeichnenden Merkmale des Verfahrens- bzw. Vorrichtungsanspruches. Weiterbildungen der Erfindung ergeben sich aus den Unteransprüchen.

Erfindungsgemäß ist vorgesehen daß gleichzeitig mit dem Senden einer Nachricht von der sendenden Station die auf dem Übertragungssystem anliegenden Signale erfaßt und mit den gesendeten Signalen verglichen werden, und daß bei Vorliegen einer Ungleichheit zwischen den gesendeten und den empfangenen Signalen der Sendevorgang wiederholt wird.

Bevorzugt kann vorgesehen sein, daß das Vergleichen der gesendeten und der empfangenen Signale in wenigstens einer der Stationen gleichzeitig erfolgt und bei Feststellen einer Ungleichheit der Sendevorgang unmittelbar abgebrochen wird.

Auch kann vorgesehen sein, daß wenigstens eine der Stationen den Vergleich Zwischen den gesendeten und den empfangenen Signalen nach dem vollständigen Senden einer Nachricht durchführt.

Des weiteren erfolgt die Erläuterung eines Ausführungsbeispiels der Erfindung anhand der Zeichnungen. Es zeigt:

Fig. 1          die Komponenten des erfindungsgemäßen Übertragungssystems, und

Fig. 2 bis 4          das Prinzip der Signalübertragung.

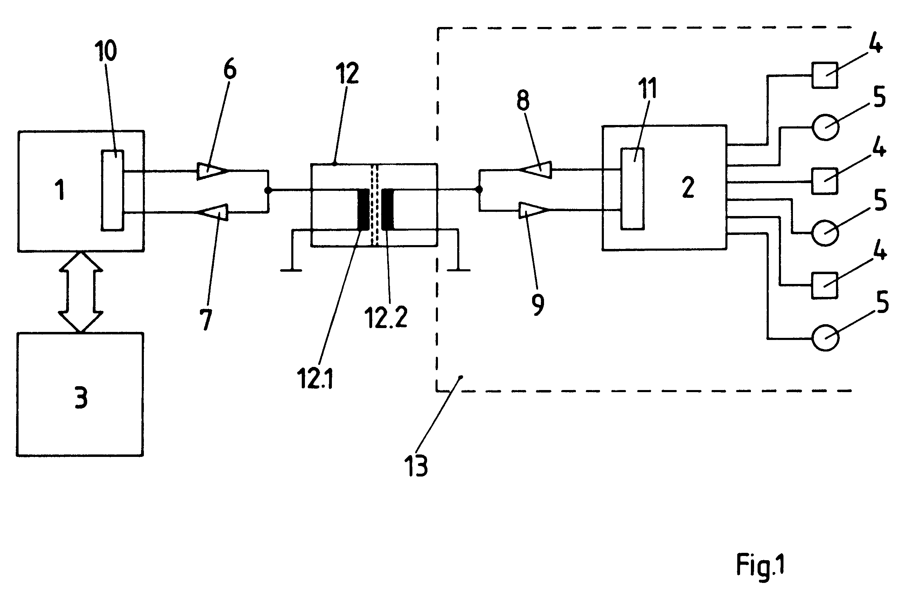

Gemäß Fig. 1 ist in einem gestrichelt angedeuteten Plattenzylinder 13 ein als Controller ausgebildeter Rechner 2 angeordnet, der mit Positionierantrieben 4 sowie mit diesen gekoppelten Signalgebern 5 über nicht dargestellte Interface-Schaltungen verbunden ist. An dem UART 11 des Rechners 2 sind zum Senden und Empfangen von Daten ein Sende- und Empfangstreiber 8, 9 angeschlossen. Da der Sende- und Empfangstreiber 8, 9 an der gleichen Leitung des noch weiter unten beschriebenen Übertragungskanal angeschlossen sind, bedingt dies, daß der Ausgang des Sendetreibers 8 gleichzeitig am Eingang des Empfangstreibers 9 angeschlossen ist.

An einem nicht dargestellten Zapfen des Plattenzylinders 13 ist der drehende Teil eines Drehübertrages 12 angebracht, der die sich mit dem Plattenzylinder 13 drehende Wicklung 12.2 des Übertragungskanals enthält. Gestellfest und in induktivem Kontakt mit der sich drehenden Wicklung 12.2 ist die Wicklung 12.1 im Drehübertrager 12 angeordnet. Ein im Druckwerk gestellfest angebrachter Rechner 1 ist ebenfalls über ein UART 10 mit einem Sende- und Empfangstreiber 6, 7 verbunden. Auch hier ist der Ausgang des Sendetreibers 6 mit dem Eingang des Empfangstreibers 7 verbunden, da beide Treiber auf die gleiche Leitung des Übertragungskanals geschaltet sind.

Der im Druckwerk angeordnete Rechner 1 steht ferner mit einer Steuerung 3 der Druckmaschine in Signalverbindung, so daß über eine nicht dargestellte Eingabevorrichtung Stellbefehle von der Steuerung 3 an den Rechner 1 gesendet werden, der über das UART 10 sowie den Sendetreiber 6 Signale an den im Plattenzylinder 14 angebrachten Rechner 2 sendet. Der Rechner 2 empfängt dabei diese seriellen Bit-Signale über den Empfangstreiber 9 und das UART 11. Diese Signale werden dann vom Rechner 2 in entsprechende Stellbefehle für die zugehörigen Positionierantriebe 4 umgesetzt und von diesen ausgeführt. In Fig. 1 ist der Stromversorgungsteil des Drehübertragers 12 nicht dargestellt.

Die mit den Positionierantrieben 4 gekoppelten Signalgeber 5, welche als Stellungsgeber ausgebildet sind, senden ihrerseits den Stellungen der Positionierantriebe 4 entsprechende Signale über den Rechner 2, das UART 11, den Sendetreiber 8 des Rechners 2 und den Drehübertrager 12 an den Rechner 1.

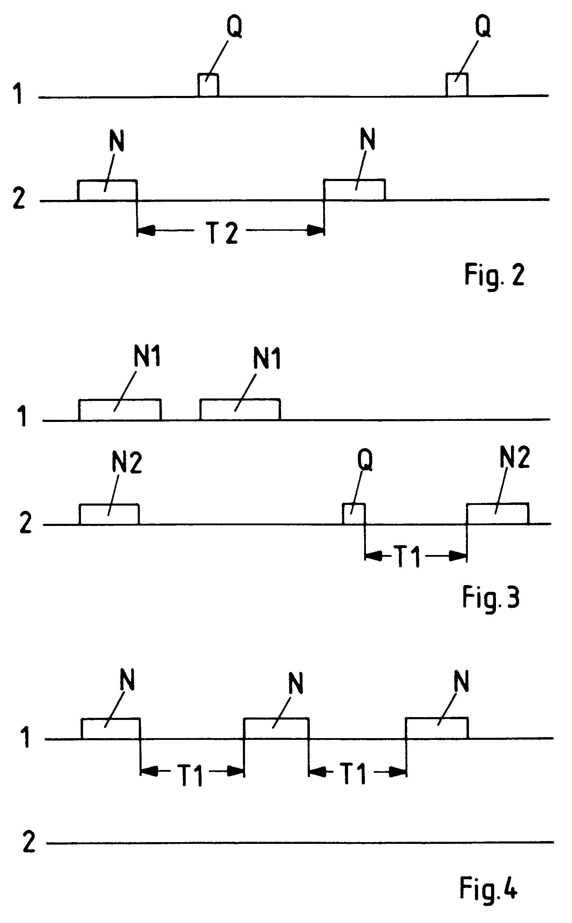

Fig. 2 zeigt prinzipiell die zeitliche Abfolge des erfindungsgemäß vorgesehenen Signalübertragungsverfahrens. Nachdem der Rechner 2 eine Nachricht N ausgegeben hat, erfolgt, nachdem der Rechner 1 dieses Signal empfangen hat, das Senden eines Quittierungssignales Q innerhalb einer Zeitspanne T1 von beispielsweise 200ms. Ferner ist vorgesehen, daß nach einer Zeitspanne T2, welche zweimal T1 beträgt, der Rechner 2 erneut eine Nachricht N senden kann, welche dann wiederum ordnungsgemäß vom Rechner 1 mit dem Quittiersignal Q bestätigt wird. Fig. 2 stellt somit den ordnungsgemäß, insbesondere kollisionsfreien Datenverkehr dar.

Bevor einer der Rechner 1, 2 ein Signal über die Sendetreiber 6, 8 sendet, wird über die Empfangstreiber 7, 9 sowie die entsprechenden UART's 10, 11 geprüft, ob der Übertragungskanal frei ist. Dabei wird geprüft, ob für ein vorgegebenes Zeitintervall kein Signal auf dem Übertragungskanal anliegt. Da aber nicht auszuschließen ist, daß beide Rechner 1, 2 zur gleichen Zeit eine Nachricht N auf den Übertragungskanal abgeben, ist vorgesehen, daß jeder der Rechner 1, 2, der über die Sendetreiber 6, 8 sendet, gleichzeitig die Signale der Empfangstreiber 7, 9 über die UART's 10, 11 einliest.

Im anhand der Fig. 2 geschilderten störungsfreien Senden einer Nachricht N von Rechner 2 an Rechner 1 bedeutet dies, daß das vom Rechner 2 gesendete Signal inhaltlich gleich dem über den Empfangstreiber 9 empfangenen Signal ist. Die über die Empfangstreiber 7, 9 den UART's 10, 11 zugeleiteten Signale werden während des Sendevorgangs dazu in vorgesehenen Speicherbereichen abgelegt und mit den entsprechend gesendeten Signalen verglichen.

Fig. 3 zeigt eine Situation, bei welcher Rechner 1 und Rechner 2 gleichzeitig eine Nachricht N1 und N2 abzusenden versuchen. Da beide Rechner 1, 2, wie erfindungsgemäß vorgesehen, gleichzeitig senden und empfangen, wird festgestellt, daß sowohl Rechner 1 als auch Rechner 2 andere Signale empfangen als als von ihnen jeweils abgesendet werden. Der Sendevorgang wird daraufhin von beiden Rechnern 1, 2 abgebrochen und Rechner 1, welche eine Sendepriorität aufweist, sendet die Nachricht N1 nach Abbruch des gescheiterten Sendeversuchs erneut. Nachdem Rechner 2 die Nachricht N1 empfangen hat wird ein Quittiersignal Q gesendet, woraufhin nach einer Aus-Zeit T1 von beispielsweise 200ms die Nachricht N2 sendet. Diese wird dann vom Rechner 1 ebenfalls mit dem Quittiersignal Q bestätigt. Ferner ist vorgesehen, daß der mit der Steuerung 3 verbundene Rechner 1 eine Sendepriorität aufweist, so daß das erneute Senden der Nachricht N1 unmittelbar nach dem gescheiterten Sendeversuch erfolgt, wohingegen der Rechner 2 für eine vorgegebene Zeitspanne gegen ein Senden gesperrt bleibt. So wird vermieden, daß eine erneute Datenkollision erfolgt.

Fig. 4 zeigt eine Situation, bei welcher im Rechner 1 eine Nachricht N abgesendet wurde, welche aber durch Rechner 2 nicht quittiert wird. Hier ist vorgesehen, daß Rechner 1 die Nachricht N eine bestimmte Anzahl mal wiederholt und wenn das Quittieren dann immer noch ausbleibt, eine Fehlermeldung an die Steuerung 3 abgibt. Auch hier ist vorgesehen, daß eine Nachricht N frühestens nach einer Zeitspanne T1 wiederholt wird. Wie bereits erwähnt ist vorgesehen, daß beide Rechner 1, 2 eine empfangene Nachricht innerhalb einer Zeitspanne T1 zu quittieren haben. Ferner ist vorgesehen, daß eine Zeitspanne T2=2 x T1 zwischen dem Senden von zwei Nachrichten N zu liegen hat.

Bezugszeichenliste

| 1 | Rechner |
|---|---|
| 2 | Rechner |
| 3 | Steuerung |
| 4 | Positionierantrieb |
| 5 | Signalgeber |
| 6 | Sendetreiber (Rechner 1) |
| 7 | Empfangstreiber (Rechner 1) |
| 8 | Sendetreiber (Rechner 2) |
| 9 | Empfangstreiber (Rechner 2) |
| 10 | UART (Rechner 1) |
| 11 | UART (Rechner 2) |
| 12 | Drehübertrager |
| 12.1 | Wicklung |
| 12.2 | Wicklung |
| 13 | Plattenzylinder |
| N, N1, N2 | Nachricht |
| Q | Quittung |
| T1, T2 | Zeitinterval |

**Patentansprüche**

1. Verfahren zur Signalübertragung zwischen zwei Stationen innerhalb einer Druckmaschine, insbesondere zwischen Stationen in einem feststehenden und einem drehenden Maschinenbauteil, bei welchem Daten seriell und bidirektional über ein einkanaliges Übertragungssystem ausgetauscht werden,
   **dadurch gekennzeichnet,**
   daß während dem Senden einer Nachricht die auf dem Übertragungssystem anliegenden Signale von der sendenden Station erfaßt und mit den gesendeten Signalen verglichen werden, und daß bei Vorliegen einer Ungleichheit zwischen den gesendeten und den empfangenen Signalen der Sendevorgang wiederholt wird.

2. Verfahren nach Anspruch 1,
   **dadurch gekennzeichnet**,
   daß das Vergleichen der gesendeten und der empfangenen Signale in wenigstens einer der Stationen gleichzeitig erfolgt und bei Feststellen einer Ungleichheit der Sendevorgang unmittelbar abgebrochen wird.

3. Verfahren nach Anspruch 1,
   **dadurch gekennzeichnet**,
   daß wenigstens eine der Stationen den Vergleich zwischen den gesendeten und den empfangenen Signalen nach dem vollständigen Senden einer Nachricht durchführt.

4. Verfahren nach einem der vorhergehenden Ansprüche,
   **dadurch gekennzeichnet**,
   daß bei Feststellen einer Gleichheit zwischen den gesendeten und gleichzeitig empfangenen Signalen die Nachricht von der gegenüberliegenden Station innerhalb einer vorgegebenen Zeitspanne (T1) quittiert wird.

5. Verfahren nach einem der vorhergehenden Ansprüche,
   **dadurch gekennzeichnet**,
   daß bei Ausbleiben eines Quittierungssignals durch die gegenüberliegende Station die Nachricht eine vorgegebene Anzahl mal wiederholt gesendet wird, wobei die einzelnen Sendevorgange durch ein vorgegebenes Zeitintervall (T1) voneinander getrennt sind und daß daraufhin ein Fehlersignal an eine mit einer der Stationen verbundene Steuerung abgegeben wird.

6. Verfahren nach einem der vorhergehenden Ansprüche,
   **dadurch gekennzeichnet**,
   daß zwischen dem Senden von zwei Nachrichten von einer der Stationen aus eine vorgegebene Zeitspanne (T2) vorgesehen ist, wobei diese Zeitspanne (T2) doppelt so groß ist wie die für das Quittieren vorgesehene Zeitspanne (T1).

7. Verfahren nach einem der vorhergehenden Ansprüche,
   **dadurch gekennzeichnet**,
   daß nach einer Datenkollision eine der Stationen den Sendevorgang unmittelbar wiederholt und die zweite Station eine vorgegebene Zeitspanne gegen ein erneutes Senden gesperrt wird.

8. Vorrichtung zur Durchführung des Verfahrens nach einem der Ansprüche 1 bis 7, mit zwei Rechnern innerhalb einer Druckmaschine und einem einkanaligem, bidirektionalem Übertragungssystem, insbesondere zwischen einem maschinenfesten Rechner und einem in einem bewegten Maschinenteil angebrachten Rechner mit zwischengeschaltetem Drehübertrager ,
   **dadurch gekennzeichnet**,
   daß die Rechner (1, 2) jeweils mit einem Sende- und Empfangstreiber (6, 7, 8, 9) mit dem Drehübertrager (12) verbunden sind, wobei über die Empfangstreiber (7, 9) der Rechner (1, 2) wahrend dem Senden einer Nachricht gleichzeitig die über die Sendetreiber (6, 8) gesendeten Signale erfaßbar, mit den gesendeten Signalen vergleichbar und bei Vorliegen einer Ungleichheit der Sendevorgang wiederholbar ist.

9. Vorrichtung nach Anspruch 8,
   **dadurch gekennzeichnet**,
   daß die Sende- und Empfangstreiber (6, 7, 8, 9) der Rechner (1, 2) jeweils an die Ein- und Ausgänge der den Rechnern zugeordneten UART's (10, 11) geschaltet sind.

Fig.1

Q                          Q

1 ——————⊓⊐——————————⊓⊐——————

    N              N
2 ——⊏⊐——————⊏⊐————————
        |←————— T2 ————→|

                              Fig. 2

  N1          N1
1 ——⊏⊐——⊏⊐————————————

  N2              Q        N2
2 ——⊏⊐——————⊏⊐——⊏⊐————
                    |←T1→|

                              Fig. 3

  N          N          N
1 ——⊏⊐————⊏⊐————⊏⊐——
      |←T1→|      |←T1→|

2 ————————————————————

                              Fig. 4